# EUROPEAN PATENT SPECIFICATION

(11) **EP 3 259 528 B1**
(45) Date of publication and mention of the grant of the patent: **15.12.2021**
(21) Application number: 16707513.4
(22) Date of filing: 19.02.2016
(51) Int. Cl.: F22B 37/00

(54) **EXHAUST SYSTEM FOR POWER GENERATING APPARATUS**
ABGASSYSTEM FÜR ENERGIEERZEUGUNGSVORRICHTUNG
SYSTÈME D'ÉVACUATION D'EFFLUENT POUR APPAREIL DE PRODUCTION D'ÉNERGIE

(30) Priority: 20.02.2015 US 201562118638 P
(43) Date of publication of application: 27.12.2017
(73) Proprietor: Johnson Matthey Public Limited Company, London EC4A 4AB (GB)
(72) Inventor: REPP, David Michael, Atlanta, GA 30324 (US)
(74) Representative: Wilson, Nicola Ann
(86) International application number: PCT/GB2016/050414
(87) International publication number: WO 2016/132138

(56) References cited:
- GB-A- 780 273
- US-A- 6 141 956
- US-A1- 2005 034 445
- US-A1- 2010 101 218
- US-A1- 2010 107 610
- US-A1- 2010 215 558
- US-A1- 2012 036 850
- US-A1- 2013 312 392

## Description

### FIELD OF THE INVENTION

The invention relates to an exhaust system for a power generating apparatus, comprising a gas turbine, which exhaust system being adapted to receive a flowing exhaust gas and comprising a catalyst system for treating the exhaust gas, which catalyst system comprising a system of oxidation catalysts. In particular, the invention relates to a method of using such systems to reduce exhaust emissions from a power generating apparatus between start-up of the power generating apparatus and full-load.

### BACKGROUND

In normal operation, gas turbine power plants generate significant amounts of carbon dioxide (CO₂), water, carbon monoxide (CO), volatile organic compounds (VOCs) and oxides of nitrogen (NOx) as part of the combustion process. Various regulatory agencies world-wide, such as the U.S. Environmental Protection Agency, are charged with reducing exhaust emissions.

Gas turbine engines typically operate by drawing air into a compressor to increase the gas pressure. A hydrocarbon fuel, typically natural gas, is combusted using the compressed air. The combustion normally takes place under relatively "lean" conditions, where more than the stoichiometric amount of oxygen necessary for complete combustion of the hydrocarbon fuel components is used. This helps to maintain a relatively low combustion temperature, which can improve the durability of materials used to make the turbines.

The high temperature, high pressure gas from a combustor is fed into a gas turbine engine where the gas expands and the temperature of the gas drops. In most applications, the gas turbine drives the compressor, as well as a generator that generates electric power. The gas leaving the turbine is at a relatively high temperature and can be used to generate steam in a heat recovery steam generator ("HRSG") before being exhausted or treated in downstream operations to reduce unwanted emissions. Steam created by the heat recovery steam generator can be used as part of a combined cycle plant to drive a steam turbine. This increases the power generation efficiency of a power plant using the HRSG.

One of the problems with such a system is that the exhaust gas contains carbon monoxide (CO), volatile organic hydrocarbons (VOC) and oxides of nitrogen (NOx), all of which are being controlled by various regulatory agencies.

Two basic types of catalytic technologies are used in reducing emissions from power plants: the use of oxidation catalysts to convert CO and VOCs, and the use of selective catalytic reduction ("SCR" catalysts) to convert NOₓ. Emissions from mobile engines, e.g. automobile engines, use oxidation and SCR catalysts in conjunction with other technologies and changes in the operating parameters of the engine to reduce emissions. However, gas turbines differ from mobile engines in that once gas turbines reach their full load operation, the operating parameters of the system stay relatively constant, unlike mobile engines where dynamic driving conditions causes changes in the load demand on the engine, which results in changeable exhaust gas temperatures. Different phases of a mobile engine's duty cycle e.g. on start-up from cold can also affect the temperature of exhaust gas contacting the exhaust gas aftertreatment catalysts. These differences in operating parameters prevent some of the technologies used in mobile engines from being used in gas turbines.

Oxidation catalysts are used to treat CO and VOCs before NOx is treated. A number of oxidation catalysts are known. The selection of the oxidation catalyst is based on a number of factors, including, but not limited to, the temperature at which the catalyst will be used, the loading of the catalyst, the fuel being combusted, the flow rate of the exhaust gas, the percentage of reduction required, etc. The use of oxidation catalysts at high temperatures is known to affect the concentrations of different nitrogen oxides produced because there is less conversion of NO to NO₂ under these conditions. Having too much NO₂ in exhaust gas entering the SCR catalyst is problematic because the activity of the SCR catalyst is impacted, and it can also participate in the formation of a brown gas plume (possibly caused by the so-called Wisconsin Process).

The amount of NOx present in gas turbine exhaust streams is often controlled using selective catalytic reduction (SCR) or selective non-catalytic reduction. SCR relies on the selective reduction of NOx using ammonia. The basic reactions can be expressed as:

4NH₃ + 4NO + O₂ → 4N₂ + 6H₂O (fast) (1);

4NH₃ + 2NO₂ + O₂ → 3N₂ + 6H₂O (slow) (2);

and

NO + NO₂ + 2NH₃ → 2N₂ + 3H₂O (very fast) (3).

Selective non-catalytic reduction processes operate without any catalyst to convert the NOx through a reaction with ammonia to nitrogen and water as shown below:

4NH₃ + 4NO + O₂ → 4N₂+ 6H₂O (4).

Non-catalytic systems are often limited to a narrow reaction temperature range. This process only reduces NOx by about 60 to 80 percent while requiring a large molar volume of NH₃.

Although the levels of CO created during combustion in a gas turbine can be reduced to currently acceptable regulatory levels, these levels do not include the start-up of the gas turbines. Thus there is a need to improve the reduction in the amounts of emissions during the start-up of gas turbines.

The industry standard method of reducing carbon monoxide and volatile organic compounds from a gas turbine is to pass the flue gas through one catalyst bed containing an oxidation catalyst. The single catalyst bed of catalyst must be sized appropriately to meet the emission requirements for different turbine loads. The bed of catalyst can be placed in different temperature regions between sets of heat transfer tubes inside of a heat recovery steam generator. The bed is currently placed in a temperature region that allows for the lowest pressure drop while still allowing for the gas turbine to meet the CO and VOC reduction requirement after the turbine has passed through a start-up period. As regulations change, gas turbines may be required to reduce CO and VOC emissions during start-up. Furthermore, higher overall reductions of CO and VOC during full load may be mandated.

US 6141956 discloses a power generation plant with an exhaust gas boiler and a highpressure reheat steam system.

GB 780273 discloses a boiler.

US 6141956A discloses a gas turbine HRSG with two oxidation catalysts.

US 2010/215558 A1 discloses a gas turbine HRSG with only one oxidation catalyst and a SCR catalyst.

### SUMMARY OF THE INVENTION

The invention is defined by claims 1 and 10.

It has been found that the use of a coupled oxidation catalyst system in the operation of a gas turbine can begin to reduce emission during start-up, as well as provide the desired reduction in CO and VOC when the turbine is running at its normal, full load. The coupled oxidation catalyst system according to the invention uses two beds of oxidation catalysts, where one bed of oxidation catalyst is located in a relatively high temperature region to allow the gas turbine to begin reducing emissions during start-up, and a second bed of oxidation catalyst is placed in a lower temperature region to provide additional catalyst surface and complete the desired CO and VOC reduction between start-up and full load.

The coupled catalyst system can provide superior overall performance in the reduction of CO and VOC, at reduced cost, and be less susceptible to poisoning than the current industry standard system that uses a single oxidation catalyst bed. The coupled oxidation catalyst system can provide for less formation of NO₂ from NO by having the first oxidation catalyst bed at the higher temperature. This is because an equilibrium exists between NO and NO₂ over an oxidation catalyst. At lower exhaust gas temperatures, NO oxidation is kinetically limited and so NO oxidation is promoted with increasing temperature. By appropriate location of the first oxidation catalyst in a relatively high temperature position, NO oxidation to NO₂ is promoted in a start-up phase so that the exhaust gas contains a mixture of NO and NO₂ in the NOₓ component of the exhaust gas. The mixture of NO and NO₂ thus generated during the start-up phase beneficially promotes the more efficient fast reaction (3) of overall NOₓ reduction on the SCR catalyst during start-up. Thus the location of the first oxidation catalyst promotes CO and VOC oxidation and NOₓ reduction during the start-up phase.

However, as exhaust gas temperatures increases from start-up to full load operation, the equilibrium constant for the NO to NO₂ reaction is shifted so that the reaction is thermodynamically limited. This means that with increasing temperature the equilibrium favours NO instead of NO₂. This is significant because NO oxidation over the first oxidation catalyst located in a relatively high temperature location is suppressed as temperatures increase and so excessive NO₂ formation ― and thus a less efficient NOₓ reduction reaction (2) on the SCR catalyst ― is avoided. However, as the temperatures increase towards full load, the second oxidation catalyst, which is located in a lower temperature location, takes over the duty of oxidising NO to NO₂ (i.e. in the kinetically limited region of equilibrium reaction) as well as CO and VOC oxidation, thus maintaining the beneficial mixture of NO and NO₂ in the exhaust gas entering the downstream SCR catalyst.

The first and second oxidation catalysts oxidise CO and VOC between start-up and full load. However, immediately following start-up, the location of the first oxidation catalyst in a relatively high temperature location enables the catalyst to reach its light-off temperature more quickly and therefore to begin oxidising CO and VOC as soon as possible after start-up.

The coupled oxidation catalyst system also significantly reduces the likelihood of exhaust gas bypassing the oxidation catalyst system without any treatment. This is because each catalyst bed is independently sealed; if any gas is able to bypass the first catalyst bed, it is very likely to be treated in the second catalyst bed. This has the advantage of increasing the reliability of the catalyst system, and is a very important feature if high CO and VOC reduction is required. The use of two catalyst beds can also result in a lower pressure drop than the use of a single large bed. The first oxidation catalyst can be present in a first block and a second block, where the first block is positioned in the flow of an exhaust gas downstream from e.g. a gas turbine before the second oxidation catalyst and the second block is positioned in the flow of an exhaust gas downstream from the first block and before the second oxidation catalyst. It is preferred that the first and the second blocks be located a distance apart that allows for mixing of the exhaust gas after it passes the first block to allow for gas that was not treated in the first block to be exposed to the second catalyst to provide for higher conversion. For example, in a HRSG, a first first oxidation catalyst in the first block can be located between a duct burner and the Super Heater and the second first oxidation catalyst in the second block can be located between the Super Heater and the high pressure evaporator. This can be important when very high oxidation activity of CO and VOCs is needed to meet regulatory requirements.

The following describes an exhaust system for a power generating apparatus, which exhaust system being adapted to receive a flowing exhaust gas and comprising a catalyst system for treating the exhaust gas, which catalyst system comprising a first oxidation catalyst and a second oxidation catalyst, wherein the first oxidation catalyst is positioned downstream from the heat source so that the flowing exhaust gas contacts the first oxidation catalyst before the second oxidation catalyst.

The following describes a power generating apparatus comprising: a heat source for combusting a fuel in air to produce power and a flowing exhaust gas comprising carbon monoxide (CO) and hydrocarbons (HC); and an exhaust system according to any preceding claim for receiving and treating the flowing exhaust gas prior to the exhaust gas being released to atmosphere. Preferably, the power generating apparatus according to the third aspect of the invention comprises a gas turbine.

The following describes a method of treating an exhaust gas emitted from power generating apparatus comprising a heat source for combusting a fuel in air to produce power and a flowing exhaust gas, which exhaust gas comprising carbon monoxide and hydrocarbons, the method comprising: contacting the exhaust gas with a first oxidation catalyst in a relatively high temperature zone and subsequently contacting exhaust gas exiting the first oxidation catalyst with a second oxidation catalyst in a relatively low temperature zone, wherein the high temperature zone has a temperature of from 427°C (800 °F) to 621°C (1150 ^{o}F) when the power generating apparatus is at full load, and the relatively low temperature zone has a temperature of from 260°C (500 ^{o}F) to 427°C (800 °F), when the power generating apparatus is at full load.

### BRIEF DESCRIPTION OF THE DRAWINGS

Figure 1 shows the percentage of oxidation vs. temperature at a constant flowrate.
Figure 2 shows the percentage of CO oxidation vs. amount of active catalyst material at a constant flow and temperature in the mass transfer limited region.
Figure 3 shows a diagram of a power plant using an HRSG system. In Figure 3 "LP" stands for "low pressure" and "HP" stands for "high pressure".

### DETAILED DESCRIPTION OF THE INVENTION

In this invention, it has been realized that a coupled oxidation catalyst system, wherein a first bed of oxidation catalyst is placed in a higher temperature region to allow the gas turbine to begin reducing emissions during start-up, and a second bed of oxidation catalyst is placed in a lower temperature region to provide additional catalyst surface and complete the desired CO and VOC reduction once the power generating apparatus has started up, can provide superior overall performance, reduce cost, and be less susceptible to poisoning than the current approach of using a single oxidation catalyst bed.

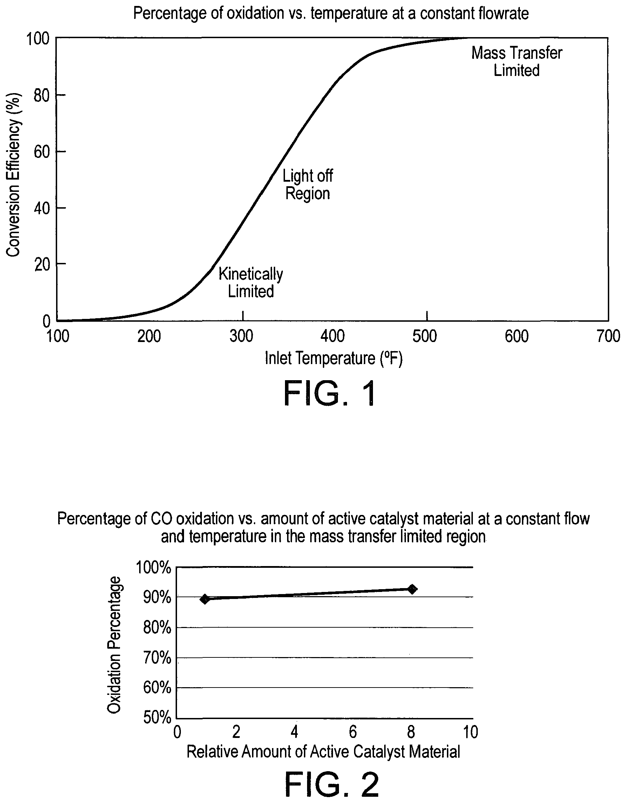

The oxidation of CO and VOC in a catalytic system is dependent on the operating temperature and the reaction residence time. The temperature at which an oxidation catalyst begins to oxidize CO and VOCs is called the light-off temperature. The light-off temperature is related to the concentration of active catalyst material in the catalyst. The higher the concentration of the catalyst, the lower the temperature at which oxidation begins. Above the light-off temperature, increasing the reaction temperature at a constant gas flow rate will increase the percentage of oxidation that is achieved until the reaction transitions from a kinetically limited region to a mass transfer limited region (see Figure 1) Once the temperature is high enough that the reaction is mass transfer limited, increasing the temperature will no longer increase the percentage of oxidation. The primary means of increasing the percentage of oxidation is by adding catalyst surface area. In the mass transfer limited region, increasing the concentration of the active catalyst material does not significantly increase the percentage of oxidation (Figure 2). A minimum emission control load is set because the performance of the catalyst is not sufficient below that load. The use of the coupled oxidation catalyst system described herein can allow e.g. a gas turbine to be operated at a lower load because the system can reduce the emissions at a lower load. This provides a significant technology improvement over the current state-of-the-art systems.

In gas turbine applications, many different operating loads exist. However, emission reduction is typically only required once the gas turbine reaches a minimum load, called the minimum emission control load. At this turbine load, the temperature at the oxidation catalyst is typically above the light off region and a single oxidation catalyst bed approach is effective because excessive precious metal loadings are not required (see Figure 1), and the total catalyst surface area required is determined by only the required level of oxidation (CO and VOC and NO oxidation) at 100% load.

During gas turbine start-up, relatively large amounts of CO and VOCs are produced. In order for a system having only a single bed oxidation catalyst to be able to meet both the start-up and full load emission requirements, desirably it would have to (1) have sufficient catalyst surface area to meet the desired removal of CO and VOC at the maximum flow and (2) have sufficient active catalyst material at concentrations to remove CO and VOC at the relatively low temperatures (<204°C (<400 °F)) encountered during start-up. This results in a large catalyst volume with a relatively high active catalyst material concentration. Because the active catalyst material is typically a precious metal, such as platinum or palladium, increasing the concentration and volume adds significantly to the cost of the catalyst. An alternate configuration would be to locate a single catalyst bed in a higher temperature zone so that the temperature of the catalyst during start-up would be sufficient to eliminate the need to increase the active catalyst material concentration and catalyst volume. However, the disadvantages of this approach are that the entire catalyst surface area required for full load CO oxidation would be located in the high temperature zone leading to higher pressure drop than a single bed in a lower temperature zone. This would require construction with a higher grade steel to support the larger volume of catalyst in the catalyst bed, and would significantly increase the undesired formation of SO₂.

Because the gas turbine exhaust flow is lower during start-up, the oxidation catalyst surface area needed to meet the emission requirement is less than the oxidation catalyst surface area needed to meet the emission requirements at 100% load. Therefore, a CO and VOC reduction system comprising two catalyst beds located in two different temperature regions offers the most beneficial solution. One bed, located in an elevated temperature region, can be optimized to meet the start-up emission requirements and, and a second bed, located in a lower temperature region, can be optimized to meet the desired conversions for CO, VOC and NOₓ after the start-up period when the temperature has risen past the catalyst light-off temperature. This optimization can include selection of the appropriate catalyst volume, cell density, and catalyst formulation for the oxidation catalyst bed in each of the two locations. Catalyst formulation options include adjusting the composition of the washcoat to add sulphur tolerance, provide additional thermal durability. The loading of the precious metal in the catalysts, the use of different precious metal compositions (such as Pd rich formulations) and other variations can be made to the catalysts in each of the two oxidation catalyst beds. In some cases, different catalysts, catalyst formulations and catalyst loading can be used for each of the first and second oxidation catalyst beds. In addition to the temperature where the catalyst becomes operational, i.e. light off temperature, another critical parameter is the time it takes for the first oxidation catalyst to heat-up to achieve its light-off temperature. In this regard, substrate monoliths e.g. honeycomb monoliths, having a relatively low heat capacity and relatively high thermal conductivity is preferred for the first oxidation catalyst. These types of potential changes in the catalysts can be made to increase the efficiency of the system.

In the current industry standard system using HRSG, the placement of the CO oxidation catalyst has been based on the needs of the selective catalytic reduction catalyst (SCR) system for converting oxides of nitrogen, including the NH₃ injection apparatus, mixing chamber and SCR catalyst. This has often led to oxidation catalysts being located at a location in the exhaust stream with an exhaust gas temperature that is advantageous to the operation of the SCR catalyst. However, this arrangement can be detrimental to the performance of the CO oxidation catalyst with respect to generation of NO₂. NO₂ concentration in the gas turbine exhaust can be increased several fold by oxidation of NO over oxidation catalysts. The catalyst can oxidize NO to equilibrium concentrations of NO₂ at local exhaust temperatures at the location of oxidation catalyst in the exhaust gas stream.

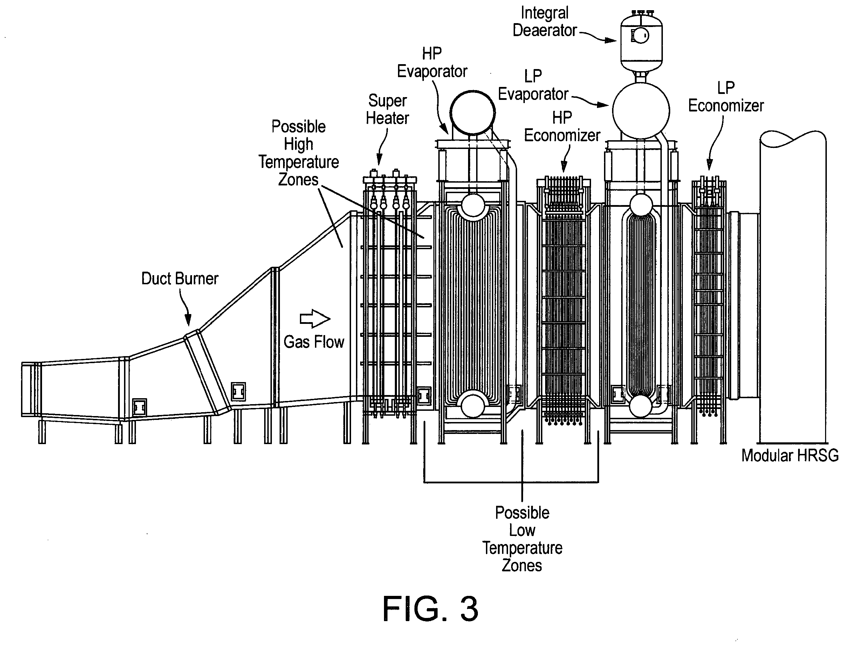

Typical oxidation catalysts operate durably at temperatures up to about 760 °C (1400 ^{o} F), which may occur in HRSG exhaust gas stream. Placement of the oxidation catalyst within the exhaust stream at a location with a temperature range of about 399°C (750 ^{o} F) to about 760°C (1400 ^{o} F) can substantially reduce NO₂ production by the catalyst. Placement of the oxidation catalyst within the exhaust gas stream at a temperature range of between approximately 510°C (950 ^{o} F) and approximately 760°C (1400 ^{o} F) may provide for an extension of the life of the durable oxidation catalyst. It can also provide for NO₂ levels that allow smaller SCR catalyst volumes to be used or more efficient NH₃ usage (both because the fast reaction (3) is in use). Figure 3 shows possible locations of the high temperature and low temperature zones in an HRSG system.

Advantageous placement of the oxidation catalyst within the exhaust stream with respect to temperature therefore can have a significant positive impact on the amount of NH₃ needed for reduction of NOx and the size needed for the SCR catalyst. Smaller catalyst size and reduced NH₃ utilization for the same NO₂ ppm output from the exhaust stack can result in substantial cost savings, as well as reduced pressure drop in the exhaust gas flow allowing more power output from the combined cycle gas turbine or fuel savings for the same power output.

According to the invention, the exhaust system comprises a heat recovery steam generator (HRSG). In a preferred arrangement, the HRSG comprises HRSG tube bundles and the first oxidation catalyst (or a first block comprising a first oxidation catalyst) is positioned to receive the flowing exhaust gas upstream of any HRSG tube bundles. Alternatively, or in addition, the HRSG comprises HRSG super heater tube bundles and the first oxidation catalyst (or a second block comprising a first oxidation catalyst) is positioned to receive the flowing exhaust gas downstream of the HRSG super heater tube bundles. The second first oxidation catalyst can be disposed in a second block and positioned to receive the flowing exhaust gas downstream of the first first oxidation catalyst disposed in a first block and upstream of the second oxidation catalyst.

The second oxidation catalyst can be positioned to receive the flowing exhaust gas downstream of at least one HRSG tube bundle. For example, the second oxidation catalyst can be positioned to receive the flowing exhaust gas downstream of one or more high pressure evaporator tube bundles.

According to the invention the catalyst system comprises an ammonia injection apparatus (AIG) disposed downstream from the second oxidation catalyst and adapted for injecting ammonia into a flowing exhaust gas and a selective catalytic reduction (SCR) catalyst for reducing oxides of nitrogen with ammonia reductant. Preferably, an ammonia slip catalyst is positioned to receive flowing exhaust gas downstream from the SCR catalyst. Ammonia slip catalysts for treating exhaust gas from are known e.g. from WO 2014/120645 and whose duty is to catalyse the overall reaction 4NH₃ + 3O₂ → 2N₂ + 6H₂O. Preferably, the exhaust system comprises a mixing section disposed downstream of the ammonia injection apparatus and adapted for mixing injected ammonia with the flowing exhaust gas.

In existing exhaust systems e.g. for gas turbines having an oxidation catalyst in either the hot or cold temperature zones, the system of the invention can be made by adding another oxidation catalyst into the corresponding zone (cold or hot temperature zone as applicable) where an oxidation catalyst is not currently present. In existing exhaust systems e.g. for gas turbines not having an oxidation catalyst in either the hot or cold temperature zones, the system of the invention can be made by adding the two oxidation catalysts in both the hot and cold temperature zones. It is preferable to remove oxidation catalysts that are not located in these zones because of the increase in back pressure from having oxidation catalysts in addition to those required by the coupled at least two oxidation catalyst system described herein.

According to the invention, the method comprises the steps of introducing ammonia into exhaust gas exiting the second oxidation catalyst and contacting the exhaust gas containing ammonia with a selective catalytic reduction catalyst, wherein the first oxidation catalyst and the second oxidation catalyst are each located in a position wherein oxidation of NO to NO₂ on the first oxidation catalyst and the second oxidation catalyst is limited relative to the respective location positions of maximal NO oxidation activity in the system.

Although the invention is illustrated and described herein with reference to specific embodiments, the invention is not intended to be limited to the details shown. Rather, various modifications may be made in the details within the scope of the claims and without departing from the invention.

## Claims

1. An exhaust system for a power generating apparatus comprising a gas turbine for combusting a fuel in air to produce power, which exhaust system being adapted to receive a flowing exhaust gas and comprising a catalyst system for treating the exhaust gas, which catalyst system comprising a first oxidation catalyst and a second oxidation catalyst, wherein the first oxidation catalyst is positioned downstream from the gas turbine so that the flowing exhaust gas contacts the first oxidation catalyst before the second oxidation catalyst, and wherein the exhaust system comprises a heat recovery steam generator (HRSG),
wherein the catalyst system comprises an ammonia injection apparatus (AIG) disposed downstream from the second oxidation catalyst and adapted for injecting ammonia into a flowing exhaust gas and a selective catalytic reduction (SCR) catalyst for reducing oxides of nitrogen with ammonia reductant.

2. An exhaust system according to claim 1, wherein the HRSG comprises HRSG tube bundles and the first oxidation catalyst is positioned to receive the flowing exhaust gas upstream of any HRSG tube bundles.

3. An exhaust system according to claim 1, wherein the HRSG comprises HRSG super heater tube bundles and the first oxidation catalyst is positioned to receive the flowing exhaust gas downstream of the HRSG super heater tube bundles.

4. An exhaust system according to any preceding claim comprising a second first oxidation catalyst disposed in a second block and positioned to receive the flowing exhaust gas downstream of the first first oxidation catalyst disposed in a first block and upstream of the second oxidation catalyst.

5. An exhaust system according to claim 2 or 4 when claim 4 is dependent on claim 2, wherein the second oxidation catalyst is positioned to receive the flowing exhaust gas downstream of at least one HRSG tube bundle.

6. An exhaust system according to any preceding claim, wherein the second oxidation catalyst is positioned to receive the flowing exhaust gas downstream of one or more high pressure evaporator tube bundles.

7. An exhaust system according to claim 1 comprising an ammonia slip catalyst positioned to receive flowing exhaust gas downstream from the SCR catalyst.

8. An exhaust system according to claim 1 or 7 comprising a mixing section disposed downstream of the ammonia injection apparatus and adapted for mixing injected ammonia with the flowing exhaust gas.

9. A power generating apparatus comprising: a gas turbine for combusting a fuel in air to produce power and a flowing exhaust gas comprising carbon monoxide (CO) and hydrocarbons (HC); and an exhaust system according to any preceding claim for receiving and treating the flowing exhaust gas prior to the exhaust gas being released to atmosphere.

10. A method of treating an exhaust gas emitted from power generating apparatus comprising a gas turbine for combusting a fuel in air to produce power and a flowing exhaust gas, which exhaust gas comprising carbon monoxide and hydrocarbons, the method comprising: contacting the exhaust gas with a first oxidation catalyst in a relatively high temperature zone and subsequently contacting exhaust gas exiting the first oxidation catalyst with a second oxidation catalyst in a relatively low temperature zone, wherein the high temperature zone has a temperature of from 427°C (800 ^{o}F) to 621°C (1150 ^{o}F) when the power generating apparatus is at full load, and the relatively low temperature zone has a temperature of from 260°C (500 ^{o}F) to 427°C (800 °F), when the power generating apparatus is at full load, the method further comprising the steps of introducing ammonia into exhaust gas exiting the second oxidation catalyst and contacting the exhaust gas containing ammonia with a selective catalytic reduction catalyst, wherein the first oxidation catalyst and the second oxidation catalyst are each located in a position wherein oxidation of NO to NO2 on the first oxidation catalyst and the second oxidation catalyst is limited relative to the respective location positions of maximal NO oxidation activity in the system.

## Patentansprüche

1. Abgassystem für eine Energieerzeugungsvorrichtung, die eine Gasturbine zum Verbrennen eines Brennstoffs in Luft zwecks Energieerzeugung umfasst, wobei das Abgassystem dafür eingerichtet ist, ein strömendes Abgas aufzunehmen, und ein Katalysatorsystem zum Behandeln des Abgases umfassend, wobei das Katalysatorsystem einen ersten Oxidationskatalysator und einen zweiten Oxidationskatalysator umfasst, wobei der erste Oxidationskatalysator prozessabwärts der Gasturbine positioniert ist, so dass das strömende Abgas vor dem zweiten Oxidationskatalysator mit dem ersten Oxidationskatalysator in Kontakt tritt, und wobei das Abgassystem einen Abhitzedampferzeuger (HRSG) umfasst, wobei das Katalysatorsystem eine Ammoniakeinspritzvorrichtung (AIG) umfasst, die prozessabwärts des zweiten Oxidationskatalysators angeordnet und dafür eingerichtet ist, Ammoniak in ein strömendes Abgas einzuspritzen, und einen Katalysator zur selektiven katalytischen Reduktion (SCR) zum Reduzieren von Stickstoffoxiden mittels Ammoniakreduktionsmittel.

2. Abgassystem nach Anspruch 1, wobei der HRSG HESG-Rohrbündel umfasst und der erste Oxidationskatalysator dafür positioniert ist, das strömende Abgas prozessaufwärts eines HRSG-Rohrbündels aufzunehmen.

3. Abgassystem nach Anspruch 1, wobei der HRSG HESG-Überhitzer-Rohrbündel umfasst und der erste Oxidationskatalysator dafür positioniert ist, das strömende Abgas prozessabwärts des HRSG-Überhitzer-Rohrbündels aufzunehmen.

4. Abgassystem nach einem vorhergehenden Anspruch, einen zweiten ersten Oxidationskatalysator umfassend, der in einem zweiten Block angeordnet und dafür positioniert ist, das strömende Abgas prozessabwärts des ersten Oxidationskatalysators aufzunehmen, der in einem ersten Block und prozessaufwärts des zweiten Oxidationskatalysators angeordnet ist.

5. Abgassystem nach Anspruch 2 oder 4, wenn Anspruch 4 abhängig von Anspruch 2 ist, wobei der zweite Oxidationskatalysator dafür positioniert ist, das strömende Abgas prozessabwärts von mindestens einem HRSG-Rohrbündel aufzunehmen.

6. Abgassystem nach einem vorhergehenden Anspruch, wobei der zweite Oxidationskatalysator dafür positioniert ist, das strömende Abgas prozessabwärts von einem oder mehreren Hochdruckverdampfer-Rohrbündeln aufzunehmen.

7. Abgassystem nach Anspruch 1, einen Ammoniakschlupfkatalysator umfassend, der dafür positioniert ist, strömendes Abgas prozessabwärts des SCR-Katalysators aufzunehmen.

8. Abgassystem nach Anspruch 1 oder 7, einen Mischabschnitt umfassend, der prozessabwärts der Ammoniakeinspritzvorrichtung angeordnet und dafür eingerichtet ist, eingespritztes Ammoniak mit dem strömenden Abgas zu mischen.

9. Energieerzeugungsvorrichtung, Folgendes umfassend: eine Gasturbine zum Verbrennen eines Brennstoffs in Luft zwecks Erzeugens von Energie und eines strömenden Abgases, das Kohlenstoffmonoxid (CO) und Kohlenwasserstoffe (HC) umfasst, und ein Abgassystem nach einem vorhergehenden Anspruch zum Aufnehmen und Behandeln des strömenden Abgases, bevor das Abgas an die Umgebung abgegeben wird.

10. Verfahren zum Behandeln eines Abgases, das aus einer Energieerzeugungsvorrichtung emittiert wird, die eine Gasturbine zum Verbrennen eines Brennstoffs in Luft zwecks Erzeugens von Energie und eines strömenden Abgases umfasst, wobei das Abgas Kohlenstoffmonoxid und Kohlenwasserstoffe umfasst, wobei das Verfahren Folgendes umfasst: In-Kontakt-Bringen des Abgases mit einem ersten Oxidationskatalysator in einer Zone mit relativ hoher Temperatur und nachfolgendes In-Kontakt-Bringen des Abgases, das aus dem ersten Oxidationskatalysator austritt, mit einem zweiten Oxidationskatalysator in einer Zone mit relativ geringer Temperatur, wobei die Zone mit hoher Temperatur eine Temperatur von 427 °C (800 °F) bis 621 °C (1150 °F) aufweist, wenn die Energieerzeugungsvorrichtung unter Volllast läuft, und die Zone mit relativ geringer Temperatur eine Temperatur von 260 °C (500 °F) bis 427 °C (800 °F) aufweist, wenn die Energieerzeugungsvorrichtung unter Volllast läuft, wobei das Verfahren ferner die folgenden Schritte umfasst: Einführen von Ammoniak in Abgas, das aus dem zweiten Oxidationskatalysator austritt, und In-Kontakt-Bringen des ammoniakhaltigen Abgases mit einem Katalysator zur selektiven katalytischen Reduktion, wobei sich der erste Oxidationskatalysator und der zweite Oxidationskatalysator jeweils an einer Position befinden, an der die Oxidation von NO zu NO₂ an dem ersten Oxidationskatalysator und dem zweiten Oxidationskatalysator relativ zu entsprechenden Positionen maximaler NO-Oxidationsaktivität in dem System begrenzt ist.

## Revendications

1. Système d'échappement pour appareil produisant de l'énergie comprenant une turbine à gaz pour brûler un carburant dans l'air pour produire de l'énergie, lequel système d'échappement étant adapté pour recevoir un gaz d'échappement d'écoulement et comprenant un système de catalyseur pour traiter le gaz d'échappement , lequel système de catalyseur comprenant un premier catalyseur d'oxydation et un second catalyseur d'oxydation, le premier catalyseur d'oxydation étant positionné en aval de la turbine à gaz de sorte que le gaz d'échappement d'écoulement entre en contact avec le premier catalyseur d'oxydation avant le second catalyseur d'oxydation, et le système d'échappement comprenant un générateur de vapeur de récupération de chaleur (HRSG),
le système de catalyseur comprenant un appareil d'injection d'ammoniac (AIG) disposé en aval du second catalyseur d'oxydation et adapté pour injecter l'ammoniac dans un gaz d'échappement d'écoulement et un catalyseur de réduction catalytique sélective (SCR) pour réduire les oxydes d'azote avec l'agent réducteur d'ammoniac.

2. Système d'échappement selon la revendication 1, dans lequel le HRSG comprend des faisceaux de tubes de HRSG et le premier catalyseur d'oxydation est positionné pour recevoir le gaz d'échappement d'écoulement en amont de l'un quelconque des faisceaux de tubes de HRSG.

3. Système d'échappement selon la revendication 1, dans lequel le HRSG comprend les faisceaux de tubes d'appareil de surchauffage de HRSG et le premier catalyseur d'oxydation est positionné pour recevoir le gaz d'échappement d'écoulement en aval des faisceaux de tubes d'appareil de surchauffage de HRSG.

4. Système d'échappement selon l'une quelconque des revendications précédentes comprenant un second premier catalyseur d'oxydation disposé dans un second bloc et positionné pour recevoir le gaz d'échappement d'écoulement en aval du premier premier catalyseur d'oxydation disposé dans un premier bloc et en amont du second catalyseur d'oxydation.

5. Système d'échappement selon la revendication 2 ou 4 quand la revendication 4 dépend de la revendication 2, dans lequel le second catalyseur d'oxydation est positionné pour recevoir le gaz d'échappement d'écoulement en aval d'au moins un faisceau de tubes de HRSG.

6. Système d'échappement selon l'une quelconque des revendications précédentes, dans lequel le second catalyseur d'oxydation est positionné pour recevoir le gaz d'échappement d'écoulement en aval d'un ou de plusieurs faisceaux de tubes d'évaporateur à haute pression.

7. Système d'échappement selon la revendication 1 comprenant un catalyseur de glissement d'ammoniac positionné pour recevoir le gaz d'échappement d'écoulement en aval du catalyseur SCR.

8. Système d'échappement selon la revendication 1 ou 7 comprenant une section de mixage disposée en aval de l'appareil d'injection d'ammoniac et adaptée pour mélanger l'ammoniac injecté avec le gaz d'écoulement d'ammoniac.

9. Appareil de production d'énergie comprenant : une turbine à gaz pour brûler un carburant dans l'air pour produire de l'énergie et un gaz d'échappement d'écoulement comprenant du monoxyde de carbone (CO) et des hydrocarbures (HC) ; et un système d'échappement selon l'une quelconque des revendications précédentes pour recevoir et traiter le gaz d'échappement d'écoulement avant que le gaz d'échappement ne soit libéré dans l'atmosphère.

10. Procédé de traitement d'un gaz d'échappement émis à partir d'un appareil de production d'énergie comprenant une turbine à gaz pour brûler un carburant dans l'air pour produire de l'énergie et un gaz d'échappement d'écoulement, lequel gaz d'échappement comprenant du monoxyde de carbone et des hydrocarbures, le procédé comprenant : la mise en contact du gaz d'échappement avec un premier catalyseur d'oxydation dans une zone de température relativement élevée puis la mise en contact du gaz d'échappement sortant du premier catalyseur d'oxydation avec un second catalyseur d'oxydation dans une zone de température relativement basse, la zone de température élevée ayant une température de 427 °C (800 °F) à 621 °C (1150 °F) quand l'appareil de production d'énergie est à pleine charge, et la zone de température relativement basse ayant une température de 260 °C (500 °F) à 427 °C (800 °F), quand l'appareil de production d'énergie est à pleine charge, le procédé comprenant en outre les étapes d'introduction d'ammoniac dans le gaz d'échappement sortant du second catalyseur d'oxydation et la mise en contact du gaz d'échappement contenant l'ammoniac avec un catalyseur de réduction catalytique sélective, le premier catalyseur d'oxydation et le second catalyseur d'oxydation étant chacun situé dans une position dans laquelle l'oxydation de NO en NO2 sur le premier catalyseur d'oxydation et le second catalyseur d'oxydation est limitée par rapport aux positions de localisation respectives de l'activité d'oxydation de NO maximale dans le système.
